# EUROPÄISCHE PATENTANMELDUNG

(11) **EP 1 085 070 A1**
(43) Veröffentlichungstag der Anmeldung: **21.03.2001**
(21) Anmeldenummer: 00119436.4
(22) Anmeldetag: 14.09.2000
(51) Int. Cl.: C09J 11/00, C09J 111/00, C09J 107/00, C09J 175/06

(54) **Klebstoffsystem mit n-Propylbromid als Lösemittel**

(30) Priorität: 15.09.1999 DE 19944279
(71) Anmelder: STAHLGRUBER Otto Gruber GmbH & Co., 81675 München (DE)
(72) Erfinder: Rauch, Christian, 85560 Ebersberg (DE)
(74) Vertreter: Beetz & Partner Patentanwälte

(57) **Zusammenfassung**

Die Erfindung betrifft ein neues Klebstoffsystem auf der Basis eines Klebers, der unter Chloroprenkautschuken, Hydroxypolyesterpolyurethanen oder Naturkautschuken ausgewählt ist, unter Verwendung von n-Propylbromid als Lösemittel.

Ziel ist dabei, den Einsatz von gesundheitsschädlichen oder sogar carcinogenen Lösemitteln bzw. brennfähigen Lösemitteln in einem Klebstoffsystem zu vermeiden, wobei jedoch hinsichtlich der Klebeeigenschaften mit Trichlorethylen vergleichbare Ergebnisse erzielt werden müssen.

## Beschreibung

Die Erfindung betrifft ein neues Klebstoffsystem auf der Basis eines Klebers, der unter Chloroprenkautschuken, Hydroxypolyesterpolyurethanen oder Naturkautschuken ausgewählt ist, unter Verwendung von n-Propylbromid als Lösemittel. Sie betrifft ferner die Verwendung von n-Propylbromid als Lösemittel in dem oben genannten Klebstoffsystem.

Bekannte, nicht brennbare Klebstoffsysteme auf der Basis von Chloroprenkautschuken, Hydroxypolyesterpolyurethanen oder Naturkautschuken werden üblicherweise hergestellt, indem diese Kleber in unbrennbaren Lösemitteln, wie z.B. Trichlorethylen gelöst und auf das zu verklebende Material aufgebracht werden. Bei Trichlorethylen handelt es sich um eine farblose, nicht brennfähige Flüssigkeit, die ein sehr gutes Lösemittel für Kautschukmischungen darstellt und leichtflüchtig ist, d.h. eine hohe Verdunstungszahl aufweist. Trichlorethylen weist jedoch den Nachteil auf, daß es toxisch wirkt und im Verdacht steht, bei längerer Einwirkung karzinogen zu sein.

Es ist die Aufgabe der vorliegenden Erfindung, ein Lösemittel für Klebstoffe auf der Basis von Polychloropren, Hydroxypolyesterpolyurethan oder Naturkautschuk anzugeben, das einerseits unbrennbar ist und ein gutes Lösevermögen und eine hohe Flüchtigkeit aufweist, und das andererseits wenig toxisch ist und kein karzinogenes Potential aufweist.

Die Erfindung betrifft daher ein Klebstoffsystem, das eine Klebstoffkomponente, die Chloroprenkautschuk, Hydroxypolyesterpolyurethan oder Naturkautschuk enthält, und als Lösemittel n-Propylbromid enthält.

Das n-Propylbromid liegt in dem Klebstoffsystem vorzugsweise in einem Mengenanteil von 60 bis 98 Gew.-% und insbesondere in einem Mengenanteil von 75 bis 95 Gew.-% vor.

Die Klebstoffkomponente kann neben Chloroprenkautschuken, Hydroxypolyesterpolyurethanen oder Naturkautschuken auch herkömmliche Zusatzstoffe und Additive oder deren Gemische enthalten. Von den Zusatzstoffen können beispielsweise weitere Polymere, die von den als Kleberkomponente verwendeten Polymeren verschieden sind, Füllstoffe, Metalloxide und Harze genannt werden. Die Additive sind beispielsweise unter Stearinsäure, Hydrolyseschutzmitteln, Mikrobenschutzmitteln, Vulkanisationsbeschleunigern, Haftsystemen oder deren Gemischen aus gewählt.

Von den weiteren Polymeren können beispielsweise Naturkautschuk, Butadienkautschuk, Styrol-Butadienkautschuk oder weitere chlorhaltige Kautschuke genannt werden. Diese weiteren Polymere können in einem Mengenanteil im Bereich von 0 bis 25 Gew.-% und vorteilhaft in einem Mengenanteil von 5 bis 25 Gew.-%, bezogen auf die gesamte Klebstoffkomponente, vorliegen.

Von den Füllstoffen können beispielsweise Ruß oder Kieselsäuren genannt werden, die vorzugsweise in einem Mengenanteil von 0 bis 15 Gew.-% und vorteilhaft in einem Mengenanteil von 7 bis 15 Gew.-%, bezogen auf das Gesamtgewicht der Klebstoffkomponente, enthalten sind.

Bei den Metalloxiden handelt es sich beispielsweise um Zinkoxid oder Magnesiumoxid in einem Mengenanteil von 0 bis 20 Gew.-% und vorteilhaft in einem Mengenanteil von 10 bis 20 Gew.-%, bezogen auf das Gesamtgewicht der Klebstoffkomponente.

Von den Harzen können Cumaron-Indenharze, Terpen-Phenolharze, Alkylphenolharze, Kolophoniumharze oder modifizierte Kolophoniumharze genannt werden; das Harz kann in einem Mengenanteil von 0 bis 15 Gew.-% und vorteilhaft in einem Mengenanteil von 3 bis 10 Gew.-% vorliegen.

Die Vulkanisationsbeschleuniger sind vorteilhaft unter Sulfenamiden, Thiuramen, Guanidinen und/oder Schwefel ausgewählt. Als Haftsystem kann beispielsweise das System Resorcin/Hexamethylentetramin verwendet werden, wie z.B. das System, das von der Fa. Degussa unter der Bezeichnung Cofill® im Handel erhältlich ist.

Die Additive können in der Zusammensetzung in einem Mengenanteil von 0 bis 10 Gew.-%, bezogen auf die Klebstoffkomponente, und insbesondere 0 bis 6 Gew.-% vorliegen.

Zusammen mit dem Klebstoffsystem kann erforderlichenfalls ein Härter verwendet werden, wobei es sich vorteilhaft um eine Diisocyanatlösung handelt. Als Diisocyanat können die auf dem Gebiet der Vernetzungsmittel wohlbekannten Diisocyanate eingesetzt werden, wie beispielsweise Toluylendiisocyanat (TDI), 4,4'-Methylendi(phenylisocyanat) (MDI), Triphenylmethan-4',4'',4'''-triisocyanat oder Thiophosphorsäure-tris-(p-isocyanatophenylester). Als Lösemittel kann in der Diisocyanatlösung beispielsweise Dichlormethan verwendet werden. Vorteilhaft wird jedoch in der Härterlösung ebenfalls n-Propylbromid als Lösemittel eingesetzt.

Wenn ein Härter zusammen mit dem Klebstoffsystem verwendet wird, liegt die Härterlösung vorzugsweise in einem Mengenanteil von 0 bis 10 Gew.-%, bezogen auf das Klebstoffsystem, vor.

Das erfindungsgemäße Klebstoffsystem weist keinerlei karzinogenes Potential auf, es ist nicht brennbar und zeigt hervorragende Klebeeigenschaften. Dadurch kann es besonders vorteilhaft für Klebeverbindungen im Untertagebereich verwendet werden.

Im folgenden wird die Erfindung anhand von Beispielen näher erläutert.

### Beispiele

### Beispiel 1

Es wurde ein Klebstoffsystem hergestellt, das als Kleber Chloroprenkautschuk und als Lösemittel n-Propylbromid enthält (K1). Als Härter wurde für dieses Klebstoffsystem eine Diisocyanatlösung verwendet, in der ebenfalls n-Propylbromid als Lösemittel eingesetzt wurde. Zum Vergleich wurde ein identisches System hergestellt, mit dem einzigen Unterschied, daß Trichlorethylen als Lösemittel in dem Klebstoffsystem verwendet wurde; in der Härterlösung wurde Methylenchlorid als Lösemittel eingesetzt (K2).

Mit diesen beiden Klebstoffsystemen wurden an verschiedenen Materialien Klebeversuche durchgeführt. Die Schälfestigkeit der verschiedenen Klebungen wurde dann nach 2h, 5h, 24h und 168h bestimmt. Die Ergebnisse sind in der nachfolgenden Tabelle I zusammengefaßt.

**Tabelle I**

| Verklebungen | | Trennwerte im Schälversuch [N/mm] nach | | | |
|---|---|---|---|---|---|
| | | 2 h | 5 h | 24 h | 168 h |
| Gummi - Gummi | K1 (Erfindung) K2 (Vergleich) | 4,0 | 5,2 | 6,4 | 7,0 |
| | | 3,6 | 4,6 | 6,6 | 8,0 |
| Gummi - Gewebe | K1 (Erfindung) K2 (Vergleich) | 3,0 | 4,1 | 5,8 | 6,3 |
| | | 2,5 | 3,5 | 5,0 | 6,4 |
| Gewebe - Gewebe | K1 (Erfindung) K2 (Vergleich) | 2,8 | 4,2 | 5,3 | 5,0 |
| | | 2,4 | 2,6 | 3,3 | 3,7 |
| Gummi - Metall | K1 (Erfindung) K2 (Vergleich) | 8,3 | 11,2 | 12,9 | 13,2 |
| | | 11,6 | 13,9 | 15,0 | 16,0 |

Aus der Tabelle ist ersichtlich, daß mit dem erfindungsgemäßen Klebstoffsystem unter Verwendung von n-Propylbromid als Lösemittel bei allen Verklebungen Ergebnisse erzielt werden können, die mit den Ergebnissen des Klebstoffsystems unter Verwendung von Trichlorethylen vergleichbar sind.

### Beispiel 2

Es wurde ein Klebstoffsystem hergestellt, das als Kleber weitgehend lineares Hydroxypolyesterpolyurethan und als Lösemittel n-Propylbromid enthält. In die Kleberkomponente können ferner Füllstoffe, Harze, Hydrolyseschutzmittel und Mikrobenschutzmittel in einem Mengenanteil von insgesamt 50 Gew.-%, bezogen auf die Kleberkomponente, eingearbeitet sein. Im vorliegenden Fall bestand der Klebstoff aus Lösemittel n-Propylbromid mit ca. 15 Gew.-% Polyurethan. Als Härter wurde eine Isocyanatlösung in einem Mengenanteil von 4 Gew.-%, bezogen auf das Klebstoffsystem, verwendet. Das erfindungsgemäße Klebstoffsystem wird im folgenden als K1 bezeichnet. Zum Vergleich wurde ein identisches Klebstoffsystem hergestellt, mit dem einzigen Unterschied, daß als Lösemittel Trichlorethylen verwendet wurde.

Mit diesen Systemen wurden an PVC bzw. Gewebe Klebeversuche durchgeführt. Die Schälfestigkeit der verschiedenen Klebungen wurde dann nach 2h, 5h, 24h und 168h bestimmt. Die Ergebnisse sind in der nachfolgenden Tabelle II zusammengefaßt.

**Tabelle II**

| Verklebungen | | Trennwerte im Schälversuch [N/mm] nach | | | |
|---|---|---|---|---|---|
| | | 2 h | 5 h | 24 h | 168 h |
| PVC - PVC | K1 (Erfindung) | 4,3 | 5,2 | 6,3 | 6,0 |
| | K2 (Vergleich) | 2,9 | 5,8 | 5,8 | 6,6 |
| Gewebe - Gewebe | K1 (Erfindung) | 1,2 | 2,3 | 3,5 | 5,4 |
| | K2 (Vergleich) | 0,8 | 1,9 | 4,0 | 4,5 |

Mit dem erfindungsgemäßen Klebstoffsystem unter Verwendung von n-Propylbromid als Lösemittel können bei allen Verklebungen Ergebnisse erzielt werden, die mit den Ergebnissen des Klebstoffsystems unter Verwendung von Trichlorethylen vergleichbar sind.

### Beispiel 3

Zur Realisierung einer Zweilagengurtverbindung wurde ein Klebstoffsystem hergestellt, das Chloroprenkautschuk als Kleber, Füllstoffe, Metalloxide sowie n-Propylbromid als Lösemittel enthält. Die Versuche wurden mit einer ca. 13-%igen Lösung der Kleberkomponente in n-Propylbromid, die mit 4 % Diisocyanat als Härter versetzt wurde, durchgeführt.

Unter Verwendung des Klebstoffsystems wurde eine Fördergurtverbindung unter Verwendung eines Zwischenzugträgers an einem Gurt der Type 1000/2 gemäß DIN 22 121 hergestellt. Die Verbindungslänge I_{V} betrug dabei 500 mm, die Stufenlänge I_{St} 200 min. Der Gurt wurde mit der Klebstofflösung zweimal, der Zwischenzugträger einmal eingestrichen. Anschließend wurde unter den folgenden Bedingungen vulkanisiert:
Druck: 1,5 N/mm²
Temperatur: 155 °C
Heizzeit: 45 min

Anschließend wurde an der Gurtverbindung die statische Bruchkraft nach DIN 51 221 ermittelt. Hierzu wurden 100 mm breite und 1050 mm lange Prüfkörper verwendet. Die Prüfgeschwindigkeit betrug 100 ± 10 mm/min.

Die statische Bruchkraft betrug in dem vorliegenden Beispiel 842 N/mm, wobei der Sollwert nach DIN 22 110 bei mindestens 800 N/mm liegt.

Dann wurde ein Dauerlaufversuch mit 400 mm breiten und 3300 mm langen Gurtstücken durchgeführt und die Restbruchkraft ermittelt. Die Verbindungen wurden an einem 6-Trommelprüfstand gemäß DIN 22 110 (Vorspannkraft 12,5 %; Gurtgeschwindigkeit 4,1 m/s) geprüft. Nach 165h wurde der Dauerlauftest abgebrochen und die Restbruchkraft ermittelt: Sie betrug 844 N/mm.

Mit dem erfindungsgemäßen Klebstoffsystem aus Chloroprenkautschuk und n-Propylbromid als Lösemittel können bezüglich der statischen Bruchkraft und der Restbruchkraft an Zweilagengurtverbindungen hervorragende Ergebnisse erzielt werden.

### Beispiel 4

In diesem Beispiel wurde ein Klebstoffsystem aus Naturkautschuk als Kleber, Füllstoffen, Metalloxiden, Harzen, Stearinsäure, einem Vulkanisationsbeschleuniger und einem Haftsystem sowie n-Propylbromid als Lösemittel verwendet. Das n-Propylbromid ist in dem Klebstoffsystem in einem Mengenanteil von 91 Gew.-% enthalten. Zum Vergleich wurde ein identisches Klebstoffsystem hergestellt, wobei jedoch Trichlorethylen als Lösemittel eingesetzt wurde.

Die beiden Klebstoffsysteme (K1 erfindungsgemäß, K2 Vergleich) wurden zur Herstellung von Stahlseilfördergurtverbindungen verwendet und es wurde die Seilausreißfestigkeit an blanken Seilen ST 2500 (ISO 7623-1984) bestimmt. Hierzu wurden zunächst Prüfkörper in folgender Weise hergestellt:

Fünf Seile ST 2500 werden parallel zueinander in einem Abstand von 5 mm angeordnet und auf beiden Seiten mit einer 10 mm starken Deckplatte versehen, die eine Länge von 100 mm und eine Breite von 65 mm aufweist. Zwischen den Seilen und den Deckplatten werden Zwischengummis von 4 mm bzw. 6 mm Dicke vorgesehen.

Die Seile sind so angeordnet, daß das mittlere Seil auf der einen Seite mit den Deckplatten abschließt und auf der gegenüberliegenden Seite weit über die Deckplatten übersteht, wohingegen die vier anderen, äußeren Seile auf der gegenüberliegenden Seite mit den Deckplatten abschließen bzw. weit überstehen.

Die Seile wurden mit den Klebstoffsystemen zweimal eingestrichen, dann wurde der Prüfkörper 90 min auf 145 °C unter Druck erwärmt. Es wurden die folgenden Ergebnisse erhalten, wobei die angegebenen Werte Mittelwerte aus drei Messungen darstellen:

**Tabelle III**

| | Seilausreißfestigkeit N/mm Einbettlänge |
|---|---|
| System mit Propylbromid K1 | 167 |
| System mit Trichlorethylen K2 | 168 |

Die Ergebnisse zeigen, daß das Klebstoffsystem unter Verwendung von n-Propylbromid Ergebnisse bezüglich der Seilausreißfestigkeit erzielt, die mit den Ergebnissen des Klebstoffsystem unter Verwendung von Trichlorethylen vergleichbar sind.

## Patentansprüche

1. Klebstoffsystem, das eine Klebstoffkomponente aufweist, die Chloroprenkautschuk, Hydroxypolyesterpolyurethan oder Naturkautschuk enthält, dadurch gekennzeichnet, daß
in dem Klebstoffsystem n-Propylbromid als Lösemittel verwendet wird.

2. Klebstoffsystem nach Anspruch 1, dadurch gekennzeichnet, daß das n-Propylbromid in dem Klebstoffsystem in einem Mengenanteil von 60 bis 98 Gew.-%, bezogen auf das Klebstoffsystem, enthalten ist.

3. Klebstoffsystem nach einem der Ansprüche 1 oder 2, dadurch gekennzeichnet, daß das n-Propylbromid in dem Klebstoffsystem in einem Mengenanteil von 75 bis 95 Gew.-%, bezogen auf das Klebstoffsystem, enthalten ist.

4. Klebstoffsystem nach einem der vorhergehenden Ansprüche, dadurch gekennzeichnet, daß die Klebstoffkomponente neben dem Kleber Zusatzstoffe und/oder Additive enthält, die unter Polymeren, Füllstoffen, Metalloxiden, Harzen, Stearinsäure, Hydrolyseschutzmitteln, Mikrobenschutzmitteln, Vulkanisationsbeschleunigern und/oder Haftsystemen ausgewählt sind.

5. Klebstoffsystem nach Anspruch 4, dadurch gekennzeichnet, daß die weiteren Polymere in einem Mengenanteil im Bereich von 0 bis 25 Gew.-% in der Klebstoffkomponente enthalten sind.

6. Klebstoffsystem nach Anspruch 4, dadurch gekennzeichnet, daß die Füllstoffe in einem Mengenanteil von 0 bis 15 Gew.-%, bezogen auf die Klebstoffkomponente, vorliegen.

7. Klebstoffsystem nach Anspruch 4, dadurch gekennzeichnet, daß die Metalloxide in einem Mengenanteil von 0 bis 20 Gew.-%, bezogen auf die Klebstoffkomponente, vorliegen.

8. Klebstoffsystem nach Anspruch 4, dadurch gekennzeichnet, daß das Harz in einem Mengenanteil im Bereich von 0 bis 15 Gew.-%, bezogen auf die Klebstoffkomponente, vorliegt.

9. Klebstoffsystem nach einem der vorhergehenden Ansprüche, dadurch gekennzeichnet, daß zusammen mit dem Klebstoffsystem ein Härter verwendet wird.

10. Klebstoffsystem nach Anspruch 9, dadurch gekennzeichnet, daß in der Härterlösung n-Propylbromid als Lösemittel verwendet wird.

11. Klebstoffsystem nach einem der vorhergehenden Ansprüche, dadurch gekennzeichnet, daß der Härter unter Toluylendiisocyanat, 4,4'-Methylendiphenylisocyanat, Triphenylmethan-4',4'',4'''-Triisocyanat oder Thiophosphorsäure-tris-(p-isocyanatophenylester) ausgewählt ist.

12. Verwendung von n-Propylbromid als Lösemittel in einem Klebstoffsystem, das als Kleber Chloroprenkautschuk, Hydroxypolyesterpolyurethan oder Naturkautschuk enthält.
